# EUROPÄISCHE PATENTSCHRIFT

(11) **EP 1 254 699 B1**
(45) Veröffentlichungstag und Bekanntmachung des Hinweises auf die Patenterteilung: **14.03.2007**
(21) Anmeldenummer: 02008534.6
(22) Anmeldetag: 16.04.2002
(51) Int. Cl.: B01F 5/02, B01F 3/02, H01M 8/04

(54) **Durchmischungsvorrichtung für Gas in Brennstoffzellen**
Mixer for gas in fuel cells
Mélangeur pour gaz dans une pile à combustible

(30) Priorität: 04.05.2001 DE 10121768
(43) Veröffentlichungstag der Anmeldung: 06.11.2002
(73) Patentinhaber: ROBERT BOSCH GMBH, 70442 Stuttgart (DE)
(72) Erfinder: Faye, Ian, 70192 Stuttgart (DE); Schuelke, Armin, 71272 Renningen (DE); Nguyen-Schaefer, Thanh-Hung, Dr., 71679 Asperg (DE)

(56) Entgegenhaltungen:
- EP-A- 0 727 611
- GB-A- 896 494
- US-A- 3 620 507
- US-A- 4 398 827
- US-A- 4 765 146
- US-A- 5 492 404
- US-A- 5 735 687
- US-B1- 6 186 481

## Beschreibung

### Stand der Technik

Die Erfindung betrifft eine Durchmischungsvorrichtung für Gase, insbesondere zur Durchmischung von einer Brennstoffzelle zugeführtem Wasserstoff und Wasserdampf mit einer Durchmischungskammer, der die Gase unter Druck durch getrennte Zuleitungen zur Durchmischung zugeführt und von der die durchmischten Gasphasen durch eine Ableitung abgeleitet werden.

In Erprobung befindliche Brennstoffzellen für KFZ-Antriebe, Lichtmaschinen, Starter und Batterien in Kraftfahrzeugen verwenden ein Gemisch aus Wasserstoff (H₂) und Wasserdampf, die der Brennstoffzelle unter Druck zugeführt werden. Aufgrund der wesentlich unterschiedlichen Molmassen des Wasserstoffs von 2 kg/kmol und des Wasserdampfs (H₂O) von 18 kg/kmol ist es schwierig, eine gute homogene Durchmischung der beiden Gase zu erhalten. In den meisten Fällen trennt sich der Wasserstoff vom Wasserdampf - aufgrund der verschiedenen Dichten - am Eingang der Brennstoffzelle. Dies kann zu Betriebsausfällen führen oder in einem schlechten Wirkungsgrad der Brennstoffzelle resultieren.

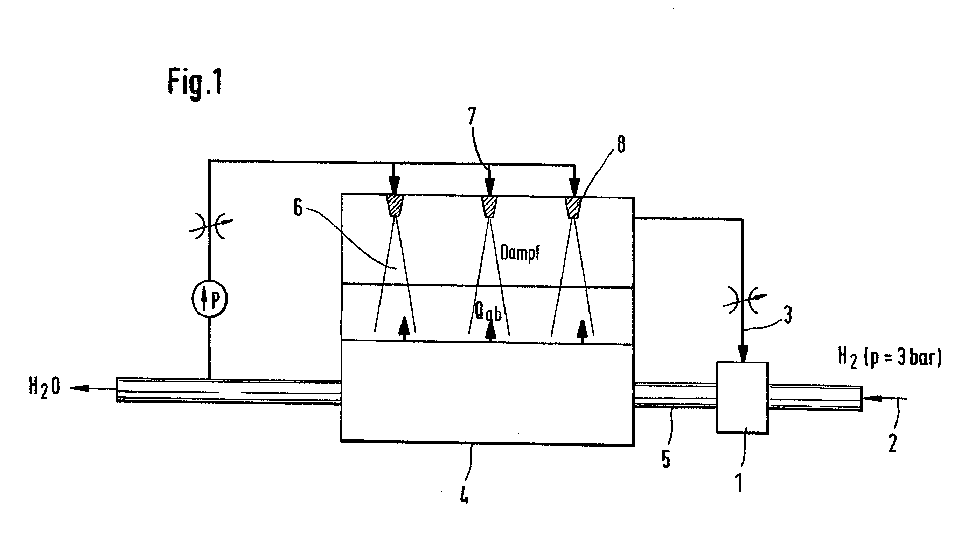

Figur 1 zeigt beispielhaft eine Brennstoffzelle 4, die mit einer Durchmischungsvorrichtung 1 zur Durchmischung von Wasserstoff und Wasserdampf versehen ist. Von rechts strömt über eine Wasserstoffzuleitung 2 Wasserstoffgas H₂ (p=3bar) zur Durchmischungskammer 1, wird dort mit Wasserdampf, der über eine Wasserdampfzuleitung 3 zugeführt wird, vermischt, und gelangt über eine Ableitung 5 in die Brennstoffzelle 4. Aus dem aus der Brennstoffzelle 4 abströmenden Wasser H₂O wird ein Teil über eine Wasserleitung 7 Einsprühdüsen 8 zugeführt, die das Wasser in eine Verdampfungskammer 6 sprühen. Durch die von der Brennstoffzelle 4 abgegebene Wärme Q_{AB} wird der eingesprühte Wassernebel in die Dampfphase überführt und der Wasserstoffzuleitung 3 eingespeist. Die Brennstoffzelle 4 ist beispielsweise vom Typ PEMFC.

Um die Funktionalität bzw. einen hohen Wirkungsgrad der Brennstoffzelle 4 zu gewährleisten, ist eine gute und homogene Durchmischung des über die Wasserstoffzuleitung 2 zugeführten Wasserstoffs mit dem über die Wasserdampfzuleitung 3 zugeführten Wasserdampf, der eine relative Feuchtigkeit von 95% bis 99% hat, notwendig.

Ist der Wasserdampfgehalt zu gering, würde eine in der Brennstoffzelle 4 enthaltene Polymermembran trocknen und sich dadurch die Erzeugungsrate der Protonen H⁺ verringern. Im umgekehrten Fall, wenn zuviel Wasserdampf enthalten ist, würden die Elektroden der Brennstoffzelle 4 überschwemmt und damit die elektrochemische Reaktion in der Brennstoffzelle 4 abgebremst. In beiden Fällen ist der Wirkungsgrad der Brennstoffzelle 4 drastisch reduziert. Im Allgemeinen benötigt man ein Proton H⁺ für drei Moleküle des Wasserdampfs H₂O.

Zur Vermischung von Gasen ist es insbesondere bei Brennern bekannt, Dralldüsen zur besseren Vermischung der Gase vorzusehen. So ist der EP 0 727 611 A1 eine Brennkammer mit Zweistufenverbrennung zu entnehmen, die zwei separate Dralldüsen zur Vermischung der Gase vorsieht. Weitere derartige Brenner sind in der US 5,735,687 und der US 4,765,146 beschrieben.

### Aufgabe und Vorteile der Erfindung

Es ist Aufgabe der Erfindung, eine Durchmischungsvorrichtung anzugeben, die eine für einen hohen Wirkungsgrad einer Brennstoffzelle geeignete gute und homogene Durchmischung des zugeführten Wasserstoffs mit dem zugeführten Wasserdampf erzielen kann.

Die obige Aufgabe wird gemäß einem wesentlichen Aspekt der Erfindung durch die Merkmale des Anspruchs 1 gelöst.

Bevorzugt haben die erste und zweite Dralldüseneinheit jeweils mindestens eine in einem Durchmischungsraum der Durchmischungskammer mündende Düsenbohrung, die so gestaltet sind, dass die von ihnen jeweils hervorgerufenen Drallströmungen des jeweils hindurchströmenden Gases oder Dampfes im Durchmischungsraum den gleichen Drallsinn haben.

Weiterhin bevorzugt führen die erste und zweite Dralldüseneinheit in einem bestimmten Winkel zueinander in die Durchmischungskammer.

Die Durchmischungskammer weist bevorzugt einen im wesentlichen zylindrischen Rohrabschnitt auf, der in seinem Inneren den Durchmischungsraum bildet. Dabei mündet die erste Wasserstoff-zuführende Dralldüseneinheit mündet an einer Stirnseite des Rohrabschnitts und die Ableitung an der entgegengesetzten Stirnseite des Rohrabschnitts, während die zweite Wasserdampf-zuführende Dralldüseneinheit unter einem bestimmten Winkel an der Rohrwand des Rohrabschnitts angeflanscht ist. Dieser Winkel kann zur Längsachse der Durchmischungskammer z.B. zwischen 20° und 60° betragen.

Gemäß einer ersten Ausführungsform weisen die erste und die zweite Dralldüseneinheit jeweils einen in einem im wesentlichen sphärischen, sich zum Durchmischungsraum konvex wölbenden Düsenkopf mündenden Rohrabschnitt auf, und in der sphärischen Wand des Düsenkopfs sind jeweils mehrere Düsenbohrungen angebracht, deren Düsenachse jeweils zum Normalenvektor, der auf der Oberfläche des jeweiligen sphärischen Düsenkopfs senkrecht steht, um einen bestimmten Winkel geneigt ist. Der zuletzt genannte Winkel kann z.B. zwischen 30° und 60° betragen.

Gemäß einer zweiten bevorzugten Ausführungsform weisen die erste und die zweite Dralldüseneinheit jeweils einen sich konisch zum Durchmischungsraum verjüngenden Düsenkopf auf, der in einer jeweils zur Düsenachse koxiale Düsenbohrung mündet, und im konischen Innenraum jedes Düsenkopfs ist eine gleichermaßen konisch zulaufende koaxiale Drallspirale vorgesehen, deren Spiralschaufel jeweils eine Wendel um einen koaxialen Nabenstift bildet und sich konisch zur Düsenbohrung hin verjüngt, wobei die beiden Drallspiralen der ersten und zweiten Dralldüseneinheit im gleichen Drehsinn gewendelt sind.

Bevorzugt sind die Drallspiralen im Innenraum jedes Düsenkopfs fixiert.

Gemäß einer dritten Ausführungsform weisen die erste und zweite Dralldüseneinheit jeweils einen sich konisch zum Durchmischungsraum verjüngenden Düsenkopf auf, der in einer jeweils zur Düsenachse koaxialen Düsenbohrung mündet, und im Innenraum jedes Düsenkopfs ist eine zur Düsenachse koaxiale gleichermaßen konisch zulaufende Drallschaufel befestigt, die die Düsenbohrung in mehrere Abschnitte unterteilt.

Bevorzugt bilden die Drallschaufeln der ersten und zweiten Dralldüseneinheit jeweils vier Drallflächen, und die Düsenbohrung ist durch diese Drallflächen in vier Bohrungsabschnitte unterteilt.

Weiterhin bevorzugt sind die Enden der Drallschaufeln um einen Winkel von etwa 30° bis 60° um die Düsenachse der jeweiligen Dralldüseneinheit gedreht.

Weiterhin bevorzugt haben die Düsenbohrung und der Innenraum des Düsenkopfs der ersten Dralldüseneinheit eine größere lichte Weite als die Düsenbohrung und der Innenraum des Düsenkopfs der zweiten Dralldüseneinheit. Dabei ist es ebenfalls zu bevorzugen, dass die Drallspirale bzw. die Drallschaufel der ersten Dralldüseneinheit eine größere periphere Weite besitzt als die Spirale bzw. die Drallschaufel der zweiten Dralldüseneinheit.

Gemäß einer vierten Ausführungsform weist die erste Dralldüseneinheit, ähnlich wie bei der dritten Ausführungsform, einen sich konisch zum Durchmischungsraum verjüngenden Düsenkopf auf, der in einer zur Düsenachse koaxialen Düsenbohrung mündet, wobei im konischen Innenraum des Düsenkopfs eine gleichermaßen konisch zulaufende zur Düsenachse koaxiale Drallschaufel sitzt, die die Düsenbohrung in mehrere Abschnitte unterteilt; die zweite Dralldüseneinheit weist mehrere unter einem bestimmten Winkel in dem Durchmischungsraum mündende und um den Umfang der Durchmischungskammer verteilte Düsenbohrungen auf, die außerhalb der Durchmischungskammer zu einem gemeinsamen Ringkanal führen, an den die Wasserdampfzuleitung angeschlossen ist.

Weitere vorteilhafte Merkmale der bevorzugten Ausführungsformen der erfindungsgemäßen Durchmischungsvorrichtung gehen aus der nachstehenden, Bezug auf die Zeichnung nehmenden Beschreibung hervor.

### Zeichnung

Figur 1 zeigt schematisch und blockartig eine eingangsseitig mit einer Durchmischungsvorrichtung versehene Brennstoffzelle, wie sie bereits beschrieben wurde.
Figur 2A zeigt einen schematischen Längsschnitt einer ersten Ausführungsform der erfindungsgemäßen Durchmischungsvorrichtung.
Figur 2B zeigt eine Draufsicht auf einen Düsenkopf der ersten und/oder zweiten Dralldüseneinheit.
Figur 2C zeigt eine Schnittansicht durch den Düsenkopf längs der Schnittebene A-A von Figur 2B.
Figur 3A zeigt einen schematischen Längsschnitt einer zweiten bevorzugten Ausführungsform der erfindungsgemäßen Durchmischungsvorrichtung gesehen auf die Schnittebene A-A von Figur 3B.
Figur 3B zeigt eine stirnseitige Ansicht von rechts auf die in Figur 3A dargestellte zweite Ausführungsform der erfindungsgemäßen Durchmischungsvorrichtung.
Figur 4A zeigt einen schematischen Längsschnitt einer dritten Ausführungsform der erfindungsgemäßen Durchmischungsvorrichtung gesehen auf die Schnittebene A-A gemäß Figur 4B.
Figur 4B zeigt die in Figur 4A dargestellte dritte Ausführungsform der erfindungsgemäßen Durchmischungsvorrichtung in einer stirnseitigen Aufrissdarstellung von rechts.
Figur 5A zeigt einen schematischen Längsschnitt einer vierten Ausführungsform der erfindungsgemäßen Durchmischungsvorrichtung gesehen auf die Schnittebene A-A.
Figur 5B zeigt eine schematische Querschnittansicht der in Figur 5A gezeigten vierten Ausführungsform der erfindungsgemäßen Durchmischungsvorrichtung, gesehen auf die Schnittebene B-B.

### Ausführungsbeispiele

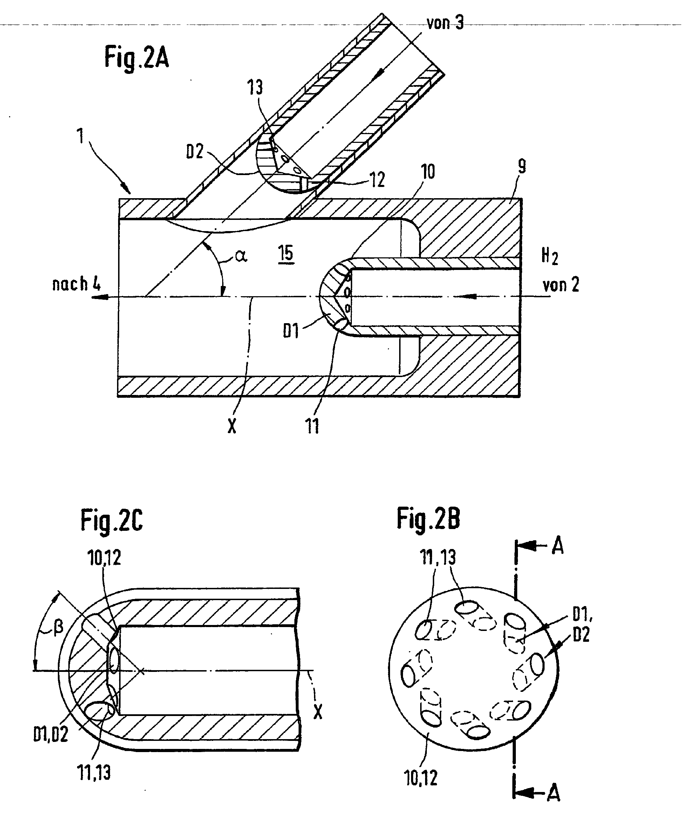

Figur 2A zeigt einen schematischen Längsschnitt durch eine erste Ausführungsform einer erfindungsgemäßen Durchmischungsvorrichtung. Letztere besteht aus einer Durchmischungskammer 9, die einen im wesentlichen zylindrischen Rohrabschnitt aufweist, der in seinem Inneren einen Durchmischungsraum 15 zur Durchmischung der zugeführten Gase bildet. Auf der in Figur 2A rechts liegenden Stirnseite der Durchmischungskammer 9 ist koaxial zur Längsachse X eine erste Dralldüseneinheit D1 angebracht. Die erste Dralldüseneinheit D1 weist einen Düsenkopf 10 auf, der ein Stück weit in den Durchmischungsraum 15 ragt. Der Düsenkopf 10 hat an seinem vorderen Ende eine im wesentlichen sphärische Form und wölbt sich dort konvex zum Durchmischungsraum 15 hin. Mehrere Düsenbohrungen 11 sind in den Düsenkopf 10 so eingebracht, dass ihre Düsenachse jeweils zu einem (in Fig. 2A nicht gezeigten) Normalenvektor, der auf der äußeren Oberfläche des sich sphärisch wölbenden Düsenkopfs 10 senkrecht steht, um einen bestimmten Winkel β (vergleiche Figur 2C) geneigt ist. Der der ersten Dralldüseneinheit D1 von der Wasserstoffzuleitung 2 unter Druck zugeführte Wasserstoff H₂ wird durch die Düsenbohrungen 11 beschleunigt, d.h. die Einströmgeschwindigkeit des Wasserstoffs in die Durchmischungskammer 15 nimmt zu.

Figur 2B zeigt eine Draufsicht auf den Düsenkopf 10 von links, die die Schrägstellung der mehreren Düsenbohrungen 11 veranschaulicht.

Die in Figur 2C gezeigte Längsschnittdarstellung durch den Düsenkopf 10 längs der Schnittebene A-A gemäß Figur 2B zeigt den Winkel β, um den die Düsenachse zum jeweiligen Normalenvektor, d.h. hier auch zur Achse X geneigt ist. Der Winkel β kann etwa 30° bis 60° betragen.

Stromabwärts von der ersten Dralldüseneinheit D1 ist eine zweite Wasserdampf-zuführende Dralldüseneinheit D2 schräg an die Rohrwand der Durchmischungskammer 9 so angeflanscht, dass die Düsenachse der zweiten Dralldüseneinheit D2 einen Winkel α zur Düsenachse der ersten Dralldüseneinheit D1, d.h. in diesem Fall auch zur Längsachse X der Durchmischungsvorrichtung 1 bildet. Der Düsenkopf 12 der zweiten Dralldüseneinheit D2 ragt gemäß Figur 2A nicht in den Durchmischungsraum 15 hinein, sondern ist etwas zurückgesetzt. Mehrere Düsenbohrungen 13 im Düsenkopf 12 der zweiten Dralldüseneinheit D2 können in derselben Weise gebildet sein wie es in den Figuren 2B und 2C gezeigt ist, d.h. ihre Düsenachsen sind um einen Winkel β zum jeweiligen Normalenvektor des sphärischen Düsenkopfs 12 geneigt, der ebenfalls 30° bis 60° betragen kann. Somit strömt der Wasserdampf stromabwärts von dem durch die erste Dralldüseneinheit D1 in eine Drallströmung versetzten Wasserstoff H₂ durch die zweite Dralldüseneinheit D2, die ähnlich wie die erste Dralldüseneinheit 10 ist, und bekommt durch die um den Winkel β geneigten Düsenbohrungen 13 ebenfalls eine Drallbewegung. Aufgrund der turbulenten Verwirbelung mischen sich die beiden Gase kräftig durch. Dies verursacht eine homogene Vermischung des zugeführten Wasserstoffs mit dem Wasserdampf kurz vor Eintritt in die in der Darstellung der Figur 2A links anschließende Brennstoffzelle 4.

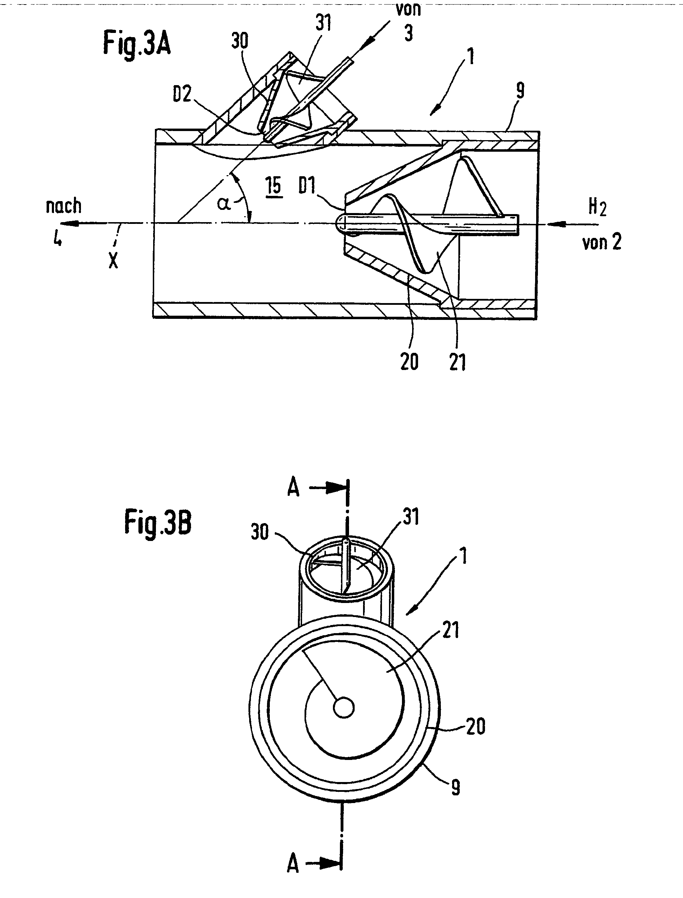

Figur 3A zeigt in Form eines schematischen Längsschnitts eine zweite Ausführungsform einer erfindungsgemäßen Durchmischungsvorrichtung 1. Wieder wird der Wasserstoff H₂ von der Wasserstoffzuleitung 2 von rechts durch eine erste Dralldüseneinheit D1 in eine rohrförmige Durchmischungskammer 9 geleitet. Die erste Dralldüseneinheit D1 sitzt koaxial in der rohrförmigen Durchmischungskammer 9 und weist einen konisch sich zum Durchmischungsraum 15 hin verjüngenden Düsenkopf 20 auf, der in einer zur Düsenachse X koaxialen Düsenbohrung mündet. Im konischen Innenraum des Düsenkopfs 10 der ersten Dralldüseneinheit D1 ist eine Drallspirale 21 befestigt, deren Spiralschaufel eine Wendel um einen koaxialen Nabenstift bildet und sich ebenfalls konisch zur Düsenbohrung hin verjüngt.

Eine zweite Wasserdampf-zuführende Dralldüseneinheit D2 ist in einem Winkel α zur Längsachse X der Durchmischungskammer 9 an deren Rohrwand angeflanscht und weist so wie die erste Dralldüseneinheit D1 einen konisch sich zum Durchmischungsraum 15 verjüngenden Düsenkopf 30 auf, der in einer zur Achse der zweiten Dralldüseneinheit D2 koaxialen Düsenbohrung mündet und in dem eine koaxiale Drallspirale 31 befestigt ist, deren Spiralschaufel eine gleichermaßen konische Wendel um einen koaxialen Nabenstift bildet und sich genau wie die Drallspirale 21 der ersten Dralldüseneinheit D1 konisch zur Düsenbohrung hin verjüngt. Die Drallspirale der zweiten Dralldüseneinheit D2 kann im gleichen Sinn gewendelt sein wie die Drallspirale 21 der ersten Dralldüseneinheit D1.

Figur 3B zeigt eine Draufsicht auf die Durchmischungsvorrichtung 1 von rechts, wobei die Schnittebene A-A des in Figur 3A gezeigten Längsschnitts angedeutet ist.

Es ist zu erwähnen und in Fig.3A ersichtlich, dass die Drallspiralen 21 und 31 der ersten und zweiten Dralldüseneinheit D1, D2 einen kleinen Abstand zur Innenwand der Düsenköpfe und die gleiche Konizität wie die Düsenköpfe 20, 30 der Dralldüseneinheiten D1 und D2 haben können. Die Drallspiralen 21, 31 der ersten und zweiten Dralldüseneinheit D1, D2 können als separate Teile, z.B. aus Kunststoff, wie PEEK, PPS, EP, etc. hergestellt werden. Die beiden durch die erste Dralldüseneinheit D1 und die zweite Dralldüseneinheit D2 verursachten Drallströmungen der beiden Gase sind turbulent , so dass sich die beiden Gase in der im Durchmischungsraum 15 befindlichen Mischungszone vor dem Eintritt in die Brennstoffzelle 4 gut vermischen.

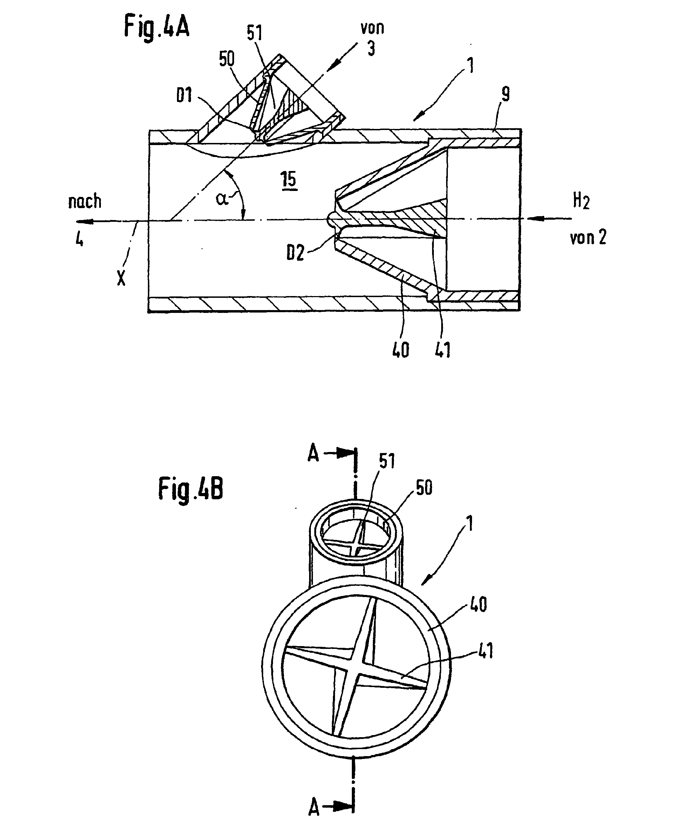

Die Figuren 4A und 4B zeigen eine dritte Ausführungsform einer erfindungsgemäßen Durchmischungsvorrichtung 1. Diese dritte Ausführungsform unterscheidet sich von der in den Figuren 3A und 3B dargestellten zweiten Ausführungsform darin, dass in der ersten und zweiten Dralldüseneinheit D1 und D2 statt einer Drallspirale jeweils Drallschaufeln 41, 51 befestigt sind, die in dem jeweiligen konisch zum Durchmischungsraum 15 zulaufenden Düsenkopf so sitzen, dass dessen Düsenbohrung jeweils in vier gleiche Abschnitte unterteilt ist. Figur 4A zeigt eine Längschnittansicht längs der Schnittebene A-A, die in Figur 4B angedeutet ist. Figur 4B zeigt, dass die beiden Enden der Drallschaufeln41 und 51 jeweils einen Winkel um die jeweilige Düsenachse bildet. Dieser Winkel kann z.B. 30° bis 60° betragen.

Die Drallschaufeln 41, 51 können ähnlich wie die Drallspiralen gemäß den Figuren 3A und 3B aus Kunststoff, z.B. aus PEEK, PPS, EP, etc. gespritzt sein. Durch die beiden Dralldüseneinheiten D1 und D2 werden die Strömungen des Wasserstoffs sowie des Wasserdampfs mit hohen Drallgeschwindigkeiten beschleunigt. Die im Durchmischungsraum 15 liegende Durchmischungszone für die beiden turbulenten Drallströmungen befindet sich unmittelbar hinter den Dralldüseneinheiten D1, D2 kurz vor Eintritt in die Brennstoffzelle 4.

Zu den oben beschriebenen und in den Figuren 3A, 3B einerseits und den Figuren 4A und 4B andererseits gezeigten Ausführungsformen erfindungsgemäßer Durchmischungsvorrichtungen ist zu erwähnen, dass die Düsenquerschnitte der Wasserdampf-zuführenden zweiten Dralldüseneinheit D2 geringer sind als die Düsenquerschnitte der ersten Wasserstoff-zuführenden Dralldüseneinheit D1.

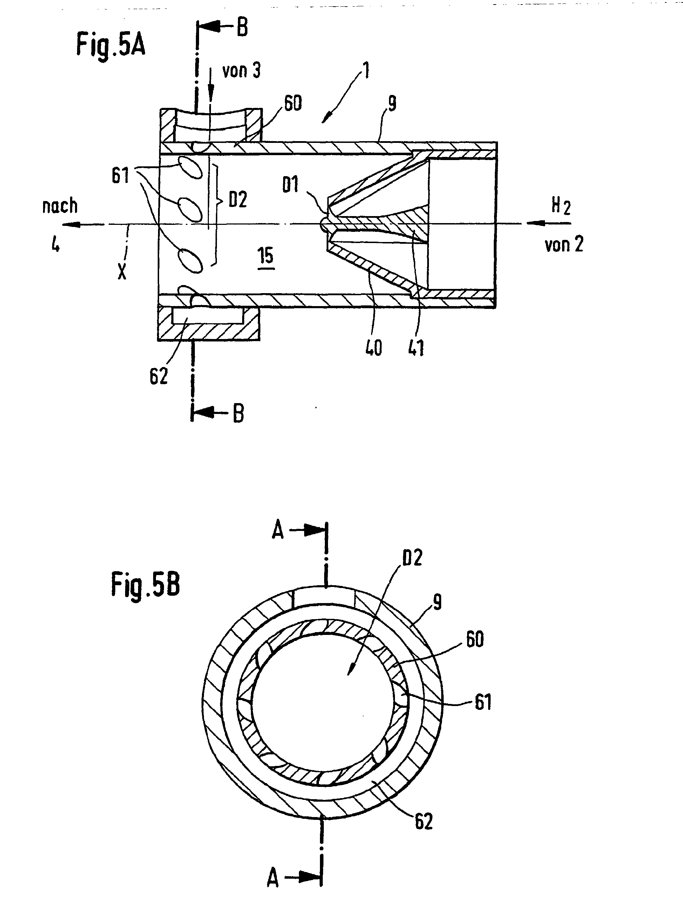

Die Figuren 5A und 5B zeigen eine vierte Ausführungsform einer erfindungsgemäßen Durchmischungsvorrichtung, die eine Kombination zwischen Drallschaufeln und Drallbohrungen bildet. Die erste Dralldüseneinheit D1 ist gestaltet wie die erste Dralldüseneinheit D1 gemäß der in Figur 4A und 4B gezeigten dritten Ausführungsform. Durch die Drallschaufel 41 wird der durch die Wasserstoffzuleitung 2 unter Druck zugeführte Wasserstoff H₂ in eine Drallströmung versetzt. Dagegen bildet die zweite Dralldüseneinheit D2 einen sich ringförmig um die Zylinderwand der Durchmischungskammer 9 erstreckenden Düsenkopf 60, der mehrere peripher gleichmäßig verteilte und in den Durchmischungsraum 15 mündende Düsenbohrungen 61 aufweist, die nach außen hin in einen Ringkanal 62 führen, an dem die Wasserdampfzufuhrleitung 3 angeschlossen ist. Von dem Ringkanal 62 strömt Wasserdampf durch die Düsenbohrungen 61 in einem bestimmten Winkel in den Durchmischungsraum 15 stromabwärts von dem durch die erste Dralldüseneinheit D1 in Drehung versetzten Wasserstoff, wobei durch die Düsenbohrungen 61 eine Drallströmung des Wasserdampfs in der im Durchmischungsraum 15 befindlichen Durchmischungszone erzeugt wird. Die beiden Drallströmungen mischen sich kurz vor Eintritt in die Brennstoffzelle 4. Die Düsenbohrungen 61 haben, wie die Figur 5B zeigt, jeweils einen Winkel schräg zur jeweiligen Tangente an den kreisförmigen Rohrabschnitt, um die Wasserdampf-Drallströmung in dem Durchmischungsraum 15 zu bewirken.

Allen vier zuvor beschriebenen und anhand der Figuren 2A bis 5B dargestellten erfindungsgemäßen Ausführungsformen ist gemeinsam, dass die Durchmischungsvorrichtung 1 eine mit der Wasserstoffzuleitung in Verbindung stehende erste Dralldüseneinheit D1 aufweist, die den über die Wasserstoffzuleitung 2 unter Druck zugeführten Wasserstoff H₂ in eine erste Drallströmung versetzt und eine mit der Wasserdampfzuleitung in Verbindung stehende zweite Dralldüseneinheit D2 aufweist, die den über die Wasserdampfzuleitung zugeführten Wasserdampf in eine zweite Drallströmung versetzt, wobei die zweite Dralldüseneinheit stromabwärts von der ersten Dralldüseneinheit in einem gemeinsamen Durchmischungsraum 15 der Durchmischungskammer 9 der Durchmischungsvorrichtung 4 mündet, so dass beide Gase eine Drallströmung mit einer hohen Drallgeschwindigkeit unmittelbar hinter den Dralldüseneinheiten erhalten, und aufgrund ihrer turbulenten Verwirbelung mischen sich die beiden Gase kräftig durch. Diese veranlasst eine weitgehend homogene Vermischung des zugeführten Wasserstoffs mit dem Wasserdampf kurz vor Eintritt in die Brennstoffzelle.

## Patentansprüche

1. Durchmischungsvorrichtung für Gase, insbesondere zur Durchmischung von einer Brennstoffzelle (4) zugeführtem Wasserstoff (H₂) und Wasserdampf, mit einer Durchmischungskammer (9), der die Gase unter Druck jeweils über Zuleitungen (2, 3) zur Durchmischung zugeführt und von der die durchmischten Gasphasen durch eine Ableitung (5) abgeleitet werden, wobei die Durchmischungsvorrichtung (1) eine mit einer ersten Zuleitung (2) in Verbindung stehende erste Dralldüseneinheit (D1) aufweist, die ein über die erste Zuleitung (2) zugeführtes erstes Gas, insbesondere Wasserstoff, in eine erste Drallströmung versetzt, und eine mit einer zweiten Zuleitung (3) in Verbindung stehende zweite Dralldüseneinheit (D2) aufweist, die ein über die zweite Zuleitung zugeführtes zweites Gas, insbesondere Wasserdampf, in eine zweite Drallströmung versetzt, wobei die zweite Dralldüseneinheit (D2) stromabwärts von der ersten Dralldüseneinheit (D1) angeordnet ist, **dadurch gekennzeichnet, dass** die erste und die zweite Dralldüseneinheit (D1, D2) jeweils einen in einem im Wesentlichen sphärischen und sich zum Durchmischungsraum (15) konvex vorwölbenden Düsenkopf (10, 12) mündenden Rohrabschnitt aufweisen, und wobei in der sphärischen Wand des Düsenkopfs (10, 12) der ersten und zweiten Dralldüseneinheit (D1, D2) jeweils mehrere Düsenbohrungen (11, 13) angebracht sind, deren Düsenachse jeweils zum Normalenvektor, der auf der Oberfläche des jeweiligen Düsenkopfs (10, 12) senkrecht steht, um einen bestimmten Winkel (β) geneigt ist.

2. Durchmischungsvorrichtung nach Anspruch 1, **dadurch gekennzeichnet, dass** die erste und zweite Dralldüseneinheit (D1, D2) jeweils mindestens eine in dem Durchmischungsraum (15) mündende Düsenbohrung (11, 13, 61) aufweisen, die so gestaltet sind, dass die von ihnen verursachten Drallströmungen des jeweils hindurchströmenden Gases oder Dampfes im Durchmischungsraum (15) den gleichen Drallsinn haben.

3. Durchmischungsvorrichtung nach einem der vorangehenden Ansprüche, **dadurch gekennzeichnet, dass** die erste und zweite Dralldüseneinheit (D1, D2) unter einem bestimmen Winkel (α) zueinander in die Durchmischungskammer (9) führen.

4. Durchmischungsvorrichtung nach einem der vorangehenden Ansprüche, **dadurch gekennzeichnet, dass** die Durchmischungskammer (9) einen im Wesentlichen zylindrischen Rohrabschnitt aufweist, der in seinem Inneren den Durchmischungsraum (15) bildet, wobei die erste wasserstoffzuführende Dralldüseneinheit (D1) an einer Stirnseite des Rohrabschnitts und die Ableitung (5) an der entgegengesetzten Stirnseite des Rohrabschnitts mündet, während die zweite wasserdampfzuführende Dralldüseneinheit (D2) unter einem bestimmten Winkel (α) an der Rohrwand des Rohrabschnitts angeflanscht ist.

5. Durchmischungsvorrichtung nach Anspruch 3 oder 4, **dadurch gekennzeichnet, dass** der Winkel (α) 20° bis 60° beträgt.

6. Durchmischungsvorrichtung nach Anspruch 1, **dadurch gekennzeichnet, dass** der Winkel (β) 30° bis 60° beträgt.

## Claims

1. Intermixing device for gases, in particular for the intermixing of water vapour and hydrogen (H₂) supplied to a fuel cell (4) and of, with an intermixing chamber (9), to which the gases are supplied under pressure, in each case via supply lines (2, 3), for intermixing and from which the intermixed gas phases are discharged through a discharge line (5), the intermixing device (1) having a first swirl-nozzle unit (D1) which is connected to a first supply line (2) and which sets a first gas, in particular hydrogen, supplied via the first supply line (2), into a first swirl flow, and a second swirl-nozzle unit (D2) which is connected to a second supply line (3) and which sets a second gas, in particular water vapour, supplied via the second supply line, into a second swirl flow, the second swirl-nozzle unit (D2) being arranged downstream of the first swirl-nozzle unit (D1), **characterized in that** the first and the second swirl-nozzle unit (D1, D2) have in each case a tubular portion issuing in an essentially spherical nozzle head (10, 12) arching convexly towards the intermixing space (15), the spherical wall of the nozzle head (10, 12) of the first and the second swirl-nozzle unit (D1, D2) having formed in it in each case a plurality of nozzle bores (11, 13), the nozzle axis of which is inclined at a specific angle (β) in each case to the normal vector which stands perpendicularly on the surface of the respective nozzle head (10, 12).

2. Intermixing device according to Claim 1, **characterized in that** the first and the second swirl-nozzle unit (D1, D2) have in each case at least one nozzle bore (11, 13, 61) issuing in the intermixing space (15) and configured such that the swirl flows, caused by them, of the gas or vapour flowing through in each case have the same swirl direction in the intermixing space (15).

3. Intermixing device according to one of the preceding claims, **characterized in that** the first and the second swirl-nozzle unit (D1, D2) lead into the intermixing chamber (9) at a specific angle (α) to one another.

4. Intermixing device according to one of the preceding claims, **characterized in that** the intermixing chamber (9) has an essentially cylindrical tubular portion which inside it forms the intermixing space (15), the first, hydrogen-supplying swirl-nozzle unit (D1) issuing at one end face of the tubular portion and the discharge line (5) issuing at the opposite end face of the tubular portion, whilst the second, water-vapour-supplying swirl-nozzle unit (D2) is flanged at a specific angle (α) to the tube wall of the tubular portion.

5. Intermixing device according to Claim 3 or 4, **characterized in that** the angle (α) is 20° to 60°.

6. Intermixing device according to Claim 1, **characterized in that** the angle (β) is 30° to 60°.

## Revendications

1. Dispositif de mélange de gaz, en particulier pour mélanger de l'hydrogène (H₂) amené depuis une cellule de combustible (4) et de la vapeur d'eau, comprenant une chambre de mélange (9) dans laquelle les gaz sont respectivement amenés sous pression par des conduites d'alimentation (2, 3) pour être mélangés et de laquelle les phases de gaz mélangées sont évacuées par une conduite d'évacuation (5), le dispositif de mélange (1) présentant une première unité de buses à turbulence (D1) en communication avec une première conduite d'alimentation (2), qui confère un premier tourbillonnement à un premier gaz, en particulier de l'hydrogène, amené par la première conduite d'alimentation (2), et une deuxième unité de buses à turbulence (D2) en communication avec une deuxième conduite d'alimentation (3), qui confère un deuxième tourbillonnement à un deuxième gaz, en particulier de la vapeur d'eau, amené par la deuxième conduite d'alimentation, la deuxième unité de buses à turbulence (D2) étant en aval de la première unité de buses à turbulence (D1),
**caractérisé en ce que**
la première et la deuxième unité de buses à turbulence (D1, D2) présentent chacune un segment de tube débouchant dans une tête de buse (10, 12) essentiellement sphérique et bombée de façon convexe en direction de la chambre de mélange (15), et la paroi sphérique de la tête de buse (10, 12) de la première et de la deuxième unité de buses à turbulence (D1, D2) comporte respectivement plusieurs alésages de buse (11, 13) sont disposés dont l'axe de buse est respectivement incliné d'un angle (β) déterminé par rapport à un vecteur normal perpendiculaire à la surface de chaque tête de buse (10, 12).

2. Dispositif de mélange de gaz selon la revendication 1,
**caractérisé en ce que**
la première et la deuxième unité de buses à turbulence (D1, D2) présentent chacune au moins un alésage de buse (11, 13, 61) débouchant dans la chambre de mélange (15), et conçus pour créer dans le gaz ou la vapeur respectivement traversant des tourbillons de même sens dans la chambre de mélange (15).

3. Dispositif de mélange selon l'une quelconque des revendications précédentes,
**caractérisé en ce que**
la première et la deuxième unité de buses à turbulence (D1, D2) s'étendent sous un angle (α) déterminé l'une par rapport à l'autre vers la chambre de mélange (9).

4. Dispositif de mélange selon l'une quelconque des revendications précédentes,
**caractérisé en ce que**
la chambre de mélange (9) présente un segment de tube essentiellement cylindrique qui forme dans son intérieur la chambre de mélange (15), la première unité de buses à turbulence (D1) amenant de l'hydrogène débouchant sur une face frontale du segment de tube et la conduite d'évacuation (5) débouchant sur la face frontale opposée du segment de tube, la deuxième unité de buses à turbulence (D2) amenant de la vapeur d'eau étant par contre bridée sous un angle (α) déterminée sur la paroi du segment de tube.

5. Dispositif de mélange selon la revendication 3 ou 4,
**caractérisé en ce que**
l'angle (α) est compris entre 20° et 60°.

6. Dispositif de mélange selon la revendication 1,
**caractérisé en ce que**
l'angle (β) est compris entre 30° et 60°.
